(19) Europäisches Patentamt
European Patent Office
Office européen des brevets

(11) Veröffentlichungsnummer : **0 163 608**
**B1**

(12) # EUROPÄISCHE PATENTSCHRIFT

(45) Veröffentlichungstag der Patentschrift : **07.09.88**

(51) Int. Cl.[4] : **D 06 P 1/673**, D 06 P 3/06, C 09 B 67/24

(21) Anmeldenummer : **85810244.5**

(22) Anmeldetag : **23.05.85**

(54) **Verfahren zum Färben von Fasermaterial aus natürlichen oder synthetischen Polyamiden mit 1:1-Metallkomplexfarbstoffen.**

(30) Priorität : **30.05.84 CH 2667/84**

(43) Veröffentlichungstag der Anmeldung : **04.12.85 Patentblatt 85/49**

(45) Bekanntmachung des Hinweises auf die Patenterteilung : **07.09.88 Patentblatt 88/36**

(84) Benannte Vertragsstaaten : **BE CH DE FR GB IT LI**

(56) Entgegenhaltungen :
**EP-A- 0 089 004**
**DE-A- 1 942 409**
**DE-A- 2 152 196**
**FR-A- 1 476 812**
**US-A- 3 592 584**
**US-A- 3 630 662**
**US-A- 3 990 842**

(73) Patentinhaber : **CIBA-GEIGY AG**
**Klybeckstrasse 141**
**CH-4002 Basel (CH)**

(72) Erfinder : **Back, Gerhard, Dr.**
**Hammerstrasse 5**
**D-7850 Lörrach (DE)**
Erfinder : **Mosimann, Walter, Dr.**
**Pappelstrasse 26**
**CH-4106 Therwil (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 163 608 B1**

Jouve, 18, rue St-Denis, 75001 Paris, France

**Beschreibung**

Die vorliegende Erfindung betrifft ein neues Verfahren zum faser- und flächenegalen Färben von natürlichen und synthetischen Polyamidfasermaterialien mit sulfogruppenhaltigen 1 : 1-Metallkomplexfarbstoffen aus wässriger Flotte in Gegenwart von Alkali- oder Ammoniumfluorid, Alkali- oder Ammoniumfluorosilikat oder Alkali- oder Ammoniumfluoroborat gegebenenfalls in Gegenwart eines Hilfsmittels, wobei bei einem faserschonenden pH-Wert von 3 bis 7 gefärbt wird, das Färbebad praktisch vollständig ausgezogen wird und die Färbung gute Gesamtechtheiten, insbesondere gute Nassechtheiten und gute Lichtechtheit zeigt, sowie das nach dem neuen Verfahren gefärbte Material und ein Mittel zur Ausführung des Verfahrens.

Nachteil der bisher üblichen Färbeverfahren für natürliche oder synthetische Polyamidfasermaterialien mit 1:1-Metallkomplexfarbstoffen ist, dass diese Farbstoffe bei einem pH-Wert von ca. 1,9 bis 2,8 gefärbt werden müssen, um egale Färbungen zu erhalten. Dem pH-Wert des Färbebades kommt beim Färben von natürlichen und synthetischen Polyamidfasermaterialien, insbesondere beim Färben von Wolle, neben der Färbedauer eine entscheidende Bedeutung zu, da natürliche und synthetische Polyamidfasermaterialien, insbesondere die Wolle, sowohl im stark sauren wie im alkalischen pH-Bereich stark angegriffen werden.

Ueberraschenderweise wurd nun ein neues Verfahren gefunden, das die genannten Nachteile nicht aufweist und welches erlaubt, auf einfache Art und Weise natürliche oder synthetische Polyamidfasermaterialien im faserschonenden pH-Bereich von 3 bis 7, insbesondere 4 bis 6, zu färben.

Gegenstand der vorliegenden Erfindung ist somit ein Verfahren zum faser- und flächenegalen Färben von Fasermaterial aus natürlichen oder synthetischen Polyamiden aus wässriger Flotte mit sulfogruppenhaltigen 1:1-Metallkomplexfarbstoffen in Gegenwart von Alkali- oder Ammoniumsalz und gegebenenfalls in Gegenwart von Hilfsmitteln, welches dadurch gekennzeichnet ist, dass man in Gegenwart von Alkali- oder Ammoniumfluorid, Alkali- oder Ammoniumfluorosilikat oder Alkali- oder Ammoniumfluoroborat bei einem pH-Wert von 3 bis 7 färbt.

Die verwendbaren sulfogruppenhaltigen 1:1-Metallkomplexfarbstoffe sind vorzugsweise Monoazo- oder Disazofarbstoffe, die als Metallion ein Chromion enthalten.

Die Mengen, in denen die 1:1-Metallkomplexfarbstoffe in den Färbebädern verwendet werden, können je nach der gewünschten Farbtiefe in weiten Grenzen schwanken, im allgemeinen haben sich Mengen von 0,01 bis 10 Gewichtsprozent, bezogen auf das Färbegut, eines oder mehrerer Farbstoffe als vorteilhaft erwiesen.

Das Färben von natürlichen oder synthetischen Polyamidfasermaterialien mit 1:1-Metallkomplexfarbstoffen in Gegenwart von Alkalisulfat oder -chlorid, wie z. B. Natriumsulfat und Natriumchlorid, und gegebenenfalls einem Hilfsmittel ist seit langem bekannt. Ueberraschenderweise ermöglicht die Verwendung von Alkalifluorid, Ammoniumfluorid, Alkali- oder Ammoniumfluorosilikat oder Alkali- oder Ammoniumfluoroborat gegebenenfalls in Gegenwart eines Hilfsmittels das Färben dieser Fasermaterialien im faserschonenden pH-Bereich.

Als Alkalifluorid wird in dem erfindungsgemässen Verfahren vorzugsweise Natrium- oder Kaliumfluorid verwendet.

Als Alkali- oder Ammoniumfluorosilikat wird in dem erfindungsgemässen Verfahren das Alkali- oder Ammoniumsalz der Hexafluorokieselsäure verwendet. Vorzugsweise wird $Na_2SiF_6$, $K_2SiF_6$ oder $(NH_4)_2SiF_6$ verwendet.

Als Alkali- oder Ammoniumfluoroborat wird in dem erfindungsgemässen Verfahren das Alkali- oder Ammoniumsalz der Fluoroborsäure verwendet. Vorzugsweise wird $NaBF_4$, $KBF_4$ oder $NH_4BF_4$ verwendet.

Bevorzugte Ausführungsarten des erfindungsgemässen Verfahrens sind dadurch gekennzeichnet, dass man

a) in Gegenwart von Alkali- oder Ammoniumfluorid färbt.
b) in Gegenwart von Alkalifluorid, insbesondere Natrium- oder Kaliumfluorid, färbt.
c) in Gegenwart von Ammoniumfluorid färbt.
d) in Gegenwart von Alkali- oder Ammoniumfluorosilikat färbt.
e) in Gegenwart von Alkalifluorosilikat, insbesondere Natrium- oder Kaliumfluorosilikat, färbt.
f) in Gegenwart von Ammoniumfluorosilikat färbt.
g) in Gegenwart von Alkali- oder Ammoniumfluoroborat färbt.
h) in Gegenwart von Alkali- oder Ammoniumfluorid und einem Hilfsmittel oder einem Hilfsmittelgemisch färbt.

Die Menge, in der das Alkali- oder Ammoniumfluorid, Alkali- oder Ammoniumfluorosilikat oder Alkali- oder Ammoniumfluoroborat, in den Färbebädern verwendet wird, kann in weiten Grenzen schwanken, im allgemeinen hat sich die halbe bis vierfache Gewichtsmenge, vorzugsweise die ein- bis dreifache und insbesondere die zwei- bis dreifache Gewichtsmenge, bezogen auf die eingesetzte Farbstoffgewichtsmenge, an Alkali- oder Ammoniumfluorid, -fluorosilikat oder -fluoroborat, als vorteilhaft erwiesen.

Die in dem erfindungsgemässen Verfahren gegebenenfalls verwendbaren Hilfsmittel sind an sich

bekannt und werden nach bekannten Methoden hergestellt. Vorzugsweise handelt es sich um Egalisierhilfsmittel oder Mischungen verschiedener Egalisierhilfsmittel ; dabei kommen anionenaktive Mittel, kationaktive Mittel, nichtionogene Mittel und amphotere Mittel oder deren Mischungen in Betracht.

Als anionenaktive Mittel seien beispielsweise genannt : substituierte Naphthalinsulfonsäuren, Schwefelsäurehalbester von Aethoxylierungsprodukten, Salze von längerkettigen Alkansulfonsäuren, Salze von Alkylarylsulfonsäuren, insbesondere Dodecylbenzolsulfonsäuren, Fettsäureamidsulfonsäuren, Schwefelsäurehalbester von Fettaminopolyglykoläthern. Als kationaktive Mittel seien beispielsweise genannt : Polyglykoläther der Fettamine, Polyglykoläther der Fettsäureamidamine, quaternäre Ammoniumverbindungen. Als nichtionogene Mittel seien beispielsweise genannt : Polyglykoläther von Fettalkoholen, von Alkylphenolen, von Harzsäuren, von Fettsäurealkylolamiden. Als amphotere Mittel seien beispielsweise genannt : Reaktionsprodukte von äthoxylierten Fettaminen und Hydroxyäthansulfonsäuren, Reaktionsprodukte aus Phenol und Styrol, Polyäthylenglykoldifettsäureester.

Vorzugsweise verwendet man Egalisierhilfsmittel enthaltend Verbindungen der Formel

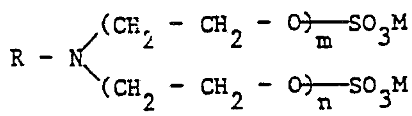

(1)

worin R einen Alkyl- oder Alkenylrest mit 12 bis 22 Kohlenstoffatomen, M Wasserstoff, Alkalimetall oder Ammonium und m und n ganze Zahlen bedeuten, wobei die Summe von m und n 2 bis 14 ist, oder der Formel

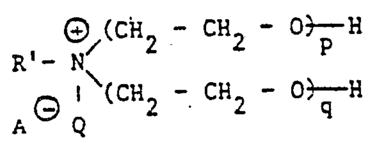

(2)

worin R′ unabhängig von R die für R angegebene Bedeutung hat, A ein Anion, Q einen gegebenenfalls substituierten Alkylrest und p und q ganze Zahlen bedeuten, wobei die Summe von p und q 2 bis 50 ist, oder der Formel

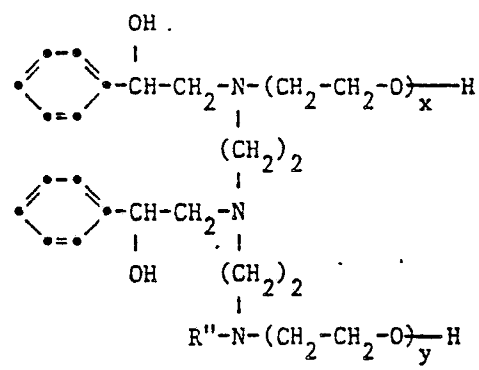

(3)

worin R″ unabhängig von R die für R angegebene Bedeutung hat und x und y ganze Zahlen bedeuten, wobei die Summe von x und y 80 bis 140 ist, eine Mischung enthaltend Verbindungen der Formel (1) und (2) oder eine Mischung enthaltend Verbindungen der Formeln (1), (2) und (3).

Insbesondere verwendet man Egalisier-Hilfsmittelgemische enthaltend 5 bis 70 Gewichtsteile der Verbindungen der Formel (1), 15 bis 60 Gewichtsteile der Verbindung der Formel (2) und 5 bis 60 Gewichtsteile der Verbindung der Formel (3), bezogen auf 100 Gewichtsteile des Egalisier-Hilfsmittelgemisches, wobei in den Formeln (1), (2) und (3) R, R′ und R″ unabhängig voneinander einen Alkyl- oder Alkenylrest mit 16 bis 22 Kohlenstoffatomen bedeuten.

Mit Vorteil verwendet man eine Verbindung der Formel (2), worin sich A und Q von den Quaternisierungsmitteln Chloracetamid, Aethylenchlorhydrin, Aethylenbromhydrin, Epichlorhydrin, Epibromhydrin oder vorzugsweise Dimethylsulfat ableiten.

In dem erfindungsgemässen Verfahren verwendet man insbesondere ein Egalisierhilfsmittelgemisch, welches ausser den Verbindungen der Formeln (1), (2) und (3), wobei die Summe von p und q in Formel (2) vorzugsweise 20 bis 50 ist, noch ein Addukt von 60 bis 100 Molen Aethylenoxid an ein Mol $C_{15-20}$-Alkenylalkohol enthält.

Ebenfalls bevorzugt ist die Verwendung eines Egalisierhilfsmittelgemisches, welches die Verbindungen der Formeln (1) und (2) enthält, worin die Summe der Symbole p und q in Formel (2) 4 bis 10 ist.

Bevorzugt ist ferner die Verwendung eines Egalisierhilfsmittelgemisches aus Verbindungen der

Formel (2), worin die Summe der Symbole p und q in Formel (2) 30 bis 40 ist und R' ein Alkylrest mit 15 bis 22 Kohlenstoffatomen ist.

Die Menge, in der das Egalisierhilfsmittel oder das Egalisierhilfsmittelgemisch in den Färbebädern verwendet wird, kann in weiten Grenzen schwanken, im allgemeinen hat sich eine Menge von 0,3 bis 3 Gewichtsprozent, vorzugsweise 1 bis 2 Gewichtsprozent, bezogen auf das Fasermaterial, an Egalisierhilfsmittel oder Egalisierhilfsmittelgemisch als vorteilhaft erwiesen.

Als weitere Hilfsmittel können die Färbebäder Mineralsäuren, wie Schwefelsäure, Sulfaminsäure oder Phosphorsäure, organische Säuren, zweckmässig niedere, aliphatische Carbonsäuren, wie Ameisen-, Essig- oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 7 mit einer organischen Säure, insbesondere Essigsäure.

Vorzugsweise färbt man bei einem pH-Wert von 4 bis 6, insbesondere 4 bis 5.

Ferner kann die Färbeflotte von Alkali- oder Ammoniumfluorid, -fluorosilikat oder -fluoroborat, verschiedene Salze, insbesondere Ammonium- oder Alkalisalze wie z. B. Ammoniumsulfat, Ammoniumacetat oder vorzugsweise Natriumacetat oder Natriumsulfat als Hilfsmittel enthalten. Vorzugsweise werden 0,1 bis 10 Gewichtsprozent Ammonium- oder Alkalisalze, bezogen auf das Fasermaterial, verwendet.

Die in dem erfindungsgemässen Verfahren verwendbaren 1:1-Metallkomplexfarbstoffe sind vorzugsweise 1:1-Chromkomplexazofarbstoffe mit 1 bis 3 Sulfonsäuregruppen, insbesondere 1 bis 2 Sulfonsäuregruppen.

In dem erfindungsgemässen Verfahren können gegebenenfalls auch Mischungen sulfogruppenhaltiger 1:1-Chromkomplexazofarbstoffe verwendet werden. Bevorzugt ist eine Mischung definitionsgemässer Farbstoffe, welche

a) mindestens zwei Farbstoffe enthält ; oder

b) mindestens drei Farbstoffe enthält ; oder

c) zum Trichromie-Färben mindestens drei Farbstoffe aus gelb- bzw. orange-, rot- und blaufärbenden Farbstoffen enthält.

Unter Trichromie ist dabei die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Insbesondere werden in dem erfindungsgemässen Verfahren 1:1-Chromkomplexazofarbstoffe der Formel

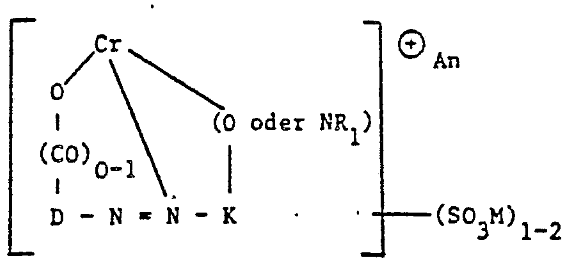

(4)

verwendet, worin —(CO) $_{0-1}$—O— und (O oder $NR_1$) in Nachbarstellung zur Azobrücke an D und K gebunden sind, D der Rest einer Diazokomponente der Benzol- oder Naphthalinreihe, K der Rest einer Kupplungskomponente der Benzol-, Naphthalin- oder heterocyclischen Reihe oder der Acetessigsäurearylidreihe, $R_1$ Wasserstoff, oder ein gegebenenfalls substituierter Alkyl- oder Phenylrest, M ein Kation und An ein Anion ist.

Bevorzugt werden in dem erfindungsgemässen Verfahren sulfogruppenhaltige 1:1-Chromkomplexazofarbstoffe der Formel (4) verwendet, worin D ein gegebenenfalls durch Halogen, $C_{1-4}$-Alkyl, $C_{1-4}$-Alkoxy, Nitro oder Sulfamoyl substituierter Benzol- oder Naphthalinrest, K ein gegebenenfalls durch Halogen, $C_{1-4}$-Alkyl, $C_{1-4}$-Alkoxy, $C_{2-4}$-Alkanoylamino, Sulfamoyl oder Hydroxy substituierter Phenyl-, Naphthyl-, 1-Phenyl-3-methylpyrazolon-(5)-, Acetoacetamid-, insbesondere Acetacetoanilid- oder Chinolinrest, $R_1$ Wasserstoff und M ein Alkalikation ist.

Die in dem erfindungsgemässen Verfahren verwendeten sulfogruppenhaltigen 1:1-Metallkomplex-Farbstoffe liegen entweder in Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten sulfogruppenhaltigen 1:1-Metallkomplexfarbstoffe sind an sich bekannt und werden nach bekannten Methoden erhalten.

Werden in dem erfindungsgemässen Verfahren Farbstoffmischungen verwendet, so können diese durch Mischung der Einzelfarbstoffe hergestellt werden. Dieser Mischprozess erfolgt beispielsweise in

geeigneten Mühlen, z. B. Kugel- oder Stiftmühlen, sowie in Knetern oder Mixern.

Ferner können die Farbstoffmischungen durch Zerstäubungstrocknen der wässrigen Farbstoffmischungen hergestellt werden.

Die Färbebäder können neben dem Farbstoff und den genannten Hilfsmitteln noch weitere übliche Zusätze wie z. B. Wollschutz-, Netz- und Entschäumungsmittel enthalten.

Das Flottenverhältnis kann innerhalb eines weiten Bereiches gewählt werden, von 1:8 bis 1:80, vorzusgweise 1:10 bis 1:30.

Das Färben erfolgt aus wässriger Flotte nach dem Ausziehverfahren z. B. bei Temperaturen zwischen 80 und 105 °C bzw. 110 °C bei Verwendung eines Formaldehyd-abspaltenden Wollschutzmittels, vorzugsweise zwischen 98 und 103 °C.

Die Färbedauer beträgt in der Regel 30 bis 120 Minuten.

Besondere Vorrichtungen sind beim erfindungsgemässen Verfahren nicht erforderlich. Es können die üblichen Färbeapparate und -maschinen, beispielsweise für Flocke, Kammzug, Stranggarn, Wickelkörper, Stückware und Teppiche verwendet werden.

Das Egalisierhilfsmittel und das Alkali- oder Ammoniumfluorid, -fluorosilikat oder -fluoroborat wird zweckmässig der wässrigen Farbstoff-Flotte zugemischt und gleichzeitig mit dem Farbstoff appliziert. Man kann auch so vorgehen, dass man das Färbegut zuerst mit dem Egalisierhilfsmittel behandelt und im gleichen Bad nach Zugabe des Farbstoffes und des Alkali- oder Ammoniumfluorids, -fluorosilikats oder -fluoroborats, färbt. Vorzugsweise geht man mit dem Fasermaterial in eine Flotte ein, die Säure und das Hilfsmittel enthält und eine Temperatur von 30 bis 70 °C aufweist. Anschliessend wird der Farbstoff oder eine Farbstoffmischung und das Alkali- oder Ammoniumfluorid, -fluorosilikat oder -fluoroborat, zugegeben und die Temperatur des Färbebades mit einer Aufheizrate von 0,75 bis 3 °C pro Minute, gegebenenfalls mit einem Temperaturstop während des Aufheizens, gesteigert, um im angegebenen Temperaturbereich von 80 °C bis 105 °C vorzugsweise 30 bis 120 Minuten zu färben. Am Schluss wird das Bad abgekühlt und das gefärbte Material wie üblich gespült und getrocknet.

Als Fasermaterial aus natürlichen Polyamiden, das erfindungsgemäss gefärbt werden kann, sind vor allem Wolle, aber auch Mischungen aus Wolle/Polyamid, Wolle/Polyester, Wolle/Cellulose oder Wolle/Polyacrylnitril sowie Seide zu erwähnen. Das Fasermaterial kann dabei in den verschiedensten Aufmachungsformen vorliegen, wie z. B. als loses Material, Kammzug, Garn und Stückware oder als Teppich.

Als Fasermaterial aus synthetischen Polyamiden, das erfindungsgemäss gefärbt werden kann, kommen alle bekannten synthetischen Polyamide in Betracht. Das Fasermaterial kann dabei in den verschiedensten Aufmachungsformen vorliegen, wie z. B. als loses Material, Kammzug, Garn und Stückware oder als Teppich.

Eine besonders bevorzugte Ausführungsform des erfindungsgemässen Verfahrens ist dadurch gekennzeichnet, dass man natürliche oder synthetische Polyamidfasermaterialien, insbesondere Wolle, mit mindestens einem 1:1-Chromkomplex der Formel (4) in Gegenwart von Natriumfluorid, Ammoniumfluorosilikat oder Natriumfluorosilikat, vorzugsweise in der zwei- bis dreifachen Gewichtsmenge, bezogen auf die Gewichtsmenge an eingesetztem 1:1-Chromkomplexfarbstoff, und gegebenenfalls in Gegenwart eines Egalisierhilfsmittels, enthaltend Verbindungen der Formel (2) oder Mischungen der Verbindungen der Formeln (1) und (2) oder (1), (2) und (3), und in Gegenwart von Natriumacetat, Ammoniumacetat oder Natriumsulfat bei einem pH von 4 bis 5 färbt.

Das erfindungsgemässe Verfahren weist gegenüber den bekannten Verfahren für Fasermaterial aus natürlichen oder synthetischen Polyamiden neben den bereits genannten noch folgende Vorteile auf. Das unter den genannten Färbebedingungen gefärbte Material zeichnet sich durch bessere Gesamtechtheiten, insbesondere bessere Nassechtheiten aus. Ein weiterer wesentlicher Vorteil besteht darin, dass die Farbstoffe praktisch vollständig aufgenommen werden.

Nach beendetem Färben sind die Färbebäder nahezu vollständig ausgezogen.

Gegenstand der Erfindung ist ferner ein Mittel zur Ausführung des erfindungsgemässen Verfahrens. Das Mittel ist eine feste Mischung enthaltend mindestens einen sulfogruppenhaltigen 1:1-Metallkomplexfarbstoff, insbesondere einen 1:1-Metallkomplexfarbstoff und Alkali- oder Ammoniumfluorid, Alkali- oder Ammoniumfluorosilikat oder Alkali- oder Ammoniumfluoroborat.

Die erfindungsgemässe Mischung wird hergestellt, indem man mindestens einen sulfogruppenhaltigen 1:1-Chromkomplexfarbstoff mit Alkali- oder Ammoniumfluorid, Alkali- oder Ammoniumfluorosilikat oder Alkali- oder Ammoniumfluoroborat mischt. Der Mischprozess erfolgt beispielsweise in geeigneten Mühlen, z. B. Kugel- oder Stiftmühlen, sowie in Knetern oder Mixern.

Bevorzugt sind Mischungen, welche ausser mindestens einem sulfogruppenhaltigen 1:1-Chromkomplexfarbstoff Natrium- oder Ammoniumfluorid oder Natrium- oder Ammoniumfluorosilikat enthalten.

In der erfindungsgemässen Mischung sind insbesondere solche 1:1-Chromkomplexe bevorzugt, welche der Formel (4) entsprechen.

Die festen Mischungen können zum Färben von natürlichen oder synthetischen Polyamidfasermaterialien verwendet werden.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm

und Kubikzentimeter. Die angegebenen Farbstoffmengen beziehen sich auf handelsüblichen Farbstoff.

Beispiel 1

800 Teile Wollkammgarn werden in einem Färbebad, welches auf 20 000 Teile enthärtetes (deionisiertes) Wasser von 50° 32 Teile Essigsäure (80 %ig), 20 Teile kristallines Natriumacetat und 12 Teile eines Egalisierhilfsmittels, bestehend aus

14,6 Teilen der anionischen Verbindung der Formel

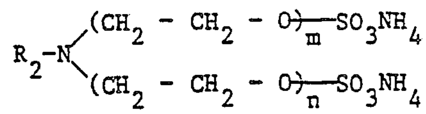

$R_2$ = Kohlenwasserstoffrest des Talgfettamins, m + n = 8 ;

21 Teilen der quaternären Verbindung der Formel

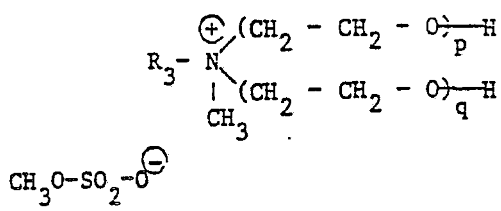

p + q = 34,

$R_3$ = $C_{20-22}$-Kohlenwasserstoffrest ;

7,7 Teilen des Umsetzungsproduktes von Oleylalkohol mit 80 Mol Aethylenoxid ; und

7 Teilen der Verbindung der Formel

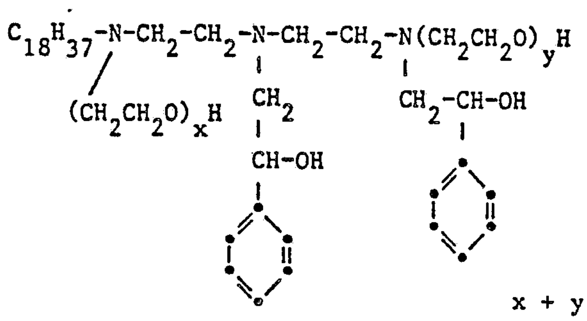

,

x + y = ca. 100

sowie 49,7 Teilen Wasser, bezogen auf 100 Teile des Egalisierhilfsmittelgemisches, enthält, während 15 Minuten bei 50° vorbehandelt. Nach Zugabe einer 50° warmen Lösung von 5,92 Teilen des 1:1-Chromkomplexes des Farbstoffes der Formel

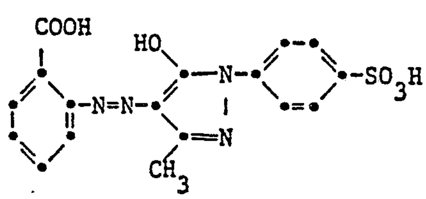

5,12 Teilen des 1:1-Chromkomplexes des Farbstoffes der Formel

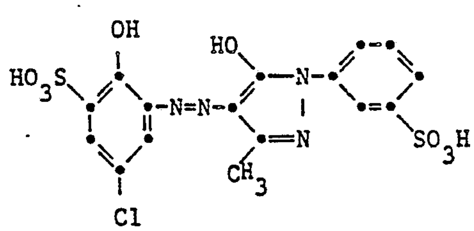

2,0 Teilen des 1:1-Chromkomplexes des Farbstoffes der Formel

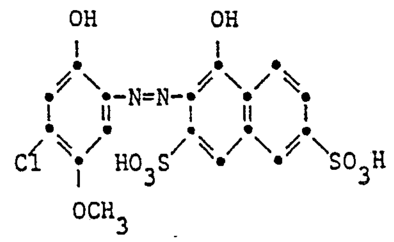

und 3,0 Teilen des 1:1-Chromkomplexes des Farbstoffes der Formel

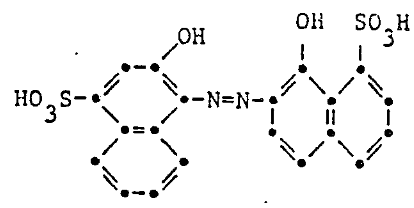

und 37 Teilen Natriumfluorid in 1 000 Teilen Wasser wird die Färbeflotte noch 10 Minuten bei 50° gehalten und anschliessend mit einer Aufheizrate von 1°/Minute auf 98° erwärmt. Der pH-Wert beträgt am Anfang des Färbens 4,4. Nach 90 Minuten Färbezeit bei 98° wird auf 50° abkühlen gelassen, das braun gefärbte Wollgarn je 10 Minuten erst bei 50° und dann bei Raumtemperatur gespült und wie üblich getrocknet. Der pH-Wert gegen Ende des Färbens beträgt 4,5. Die erhaltene mittelbraune Färbung ist ausgezeichnet faseregal ; das gefärbte Kammgarn zeigt einen vollen, weichen Griff. Die Endflotte ist praktisch ungefärbt.

Eine mit den gleichen Farbstoffen nach dem obigen Verfahren, aber ohne Zusatz von Natriumfluorid durchgeführte Garnfärbung ist stark faserunegal und ganz bedeutend schwächer. Die Endflotte ist noch deutlich gefärbt.

## Beispiel 2

800 Teile Wollkammgarn werden in einem Färbebad, welches auf 20 000 Teile Wasser von 50°, 64 Teile Natriumsulfat, 24 Teile $(NH_4)_2SiF_6$ und 12 Teile eines Egalisierhilfsmittels, bestehend aus

24 Teilen der anionischen Verbindung der Formel

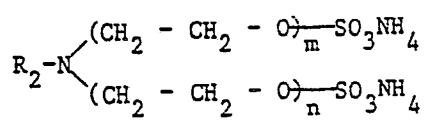

$R_2$ = $C_{16-18}$-Kohlenwasserstoffrest ; m + n = 7 ;

24 Teilen der quaternären Verbindung der Formel

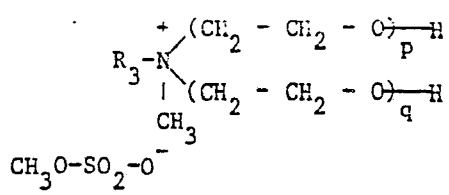

p + q = 34,

$R_3$ = $C_{20-22}$-Kohlenwasserstoffrest ;

5 Teilen Ammoniumchlorid

3 Teilen Oxalsäure und

44 Teilen Wasser, bezogen auf 100 Teile Egalisierhilfsmittel, während 15 Minuten bei 50° vorbehandelt. Nach Zugabe einer Lösung von

4,4 Teilen des 1:1-Chromkomplexes des Farbstoffes der Formel

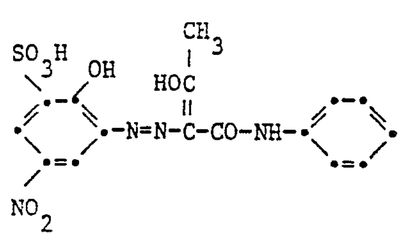

4,8 Teilen des 1:1-Chromkomplexes des Farbstoffes der Formel

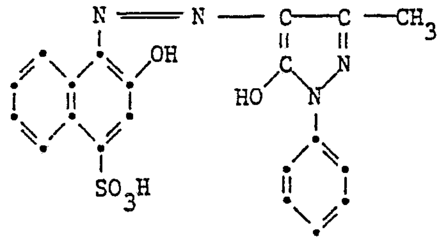

1,2 Teilen des 1:1-Chromkomplexes des Farbstoffes der Formel

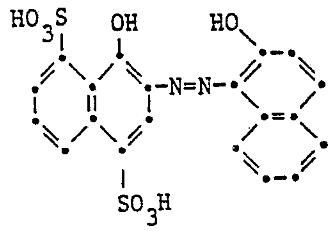

und 1,3 Teilen des 1:1-Chromkomplexes des Farbstoffes der Formel

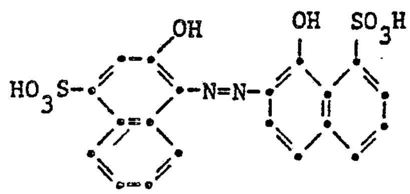

wird die Färbeflotte noch 10 Minuten bei 50° gehalten und anschliessend mit einer Aufheizrate von 0,8°/Minute auf 98° erwärmt. Der pH beträgt zu Anfang des Färbens 4,6. Nach 90 Minuten Färbezeit bei 98° wird auf 50° abgekühlt und die Färbeflotte abgelassen. Das braungefärbte Wollgarn wird je 10 Minuten erst bei 50°, dann bei Raumtemperatur gespült und wie üblich getrocknet. Die erhaltene mittelbraune Färbung ist ausgezeichnet faseregal und weist gute Echtheiten auf.

Beispiel 3

800 Teile Wollkammgarn werden in einem Färbebad, welches auf 20 000 Teile Wasser von 50° 64 Teile Natriumsulfat, 25 Teile $Na_2SiF_6$, 18 Teile Essigsäure (80 %ig) und 12 Teile des in Beispiel 2 verwendeten Egalisierhilfsmittels enthält, während 15 Minuten bei 50° vorbehandelt. Nach Zugabe einer Lösung von

3,85 Teilen des 1:1-Chromkomplexes des Farbstoffes der Formel

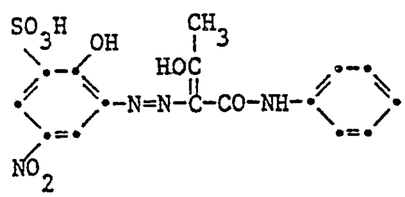

4 Teilen des 1:1-Chromkomplexes des Farbstoffes der Formel

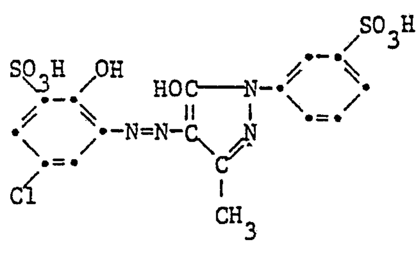

2 Teilen des 1:1-Chromkomplexes des Farbstoffes der Formel

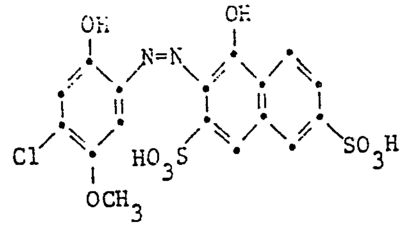

und 3 Teilen des 1:1-Chromkomplexes des Farbstoffes der Formel

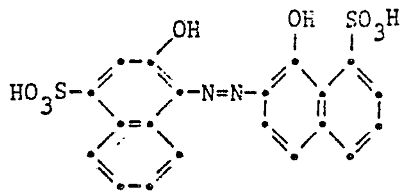

wird die Färbeflotte noch 10 Minuten bei 50° gehalten und anschliessend mit einer Aufheizrate von 1°/Minute auf 70° erwärmt, noch 20 Minuten bei 70° gehalten und anschliessend mit 1°/Minute auf 85° erwärmt. Der pH-Wert beträgt am Anfang des Färbens 4,5. Nach 120 Minuten Färbezeit bei 85° wird auf 50° abgekühlt und die Färbeflotte abgelassen. Das braungefärbte Wollgarn wird je 10 Minuten bei 50°, dann bei Raumtemperatur gespült und wie üblich getrocknet. Die erhaltene volle Braunfärbung ist ausgezeichnet faseregal und weist gute Echtheiten auf.

Eine mit den gleichen Farbstoffen nach obigem Verfahren, aber ohne Zusatz von $Na_2SiF_6$ durchgeführte Garnfärbung ist stark faserunegal und ganz bedeutend schwächer.

Beispiel 4

800 Teile Wollkammgarn werden in einem Färbebad, welches auf 20 000 Teile Wasser von 50° 64 Teile Natriumsulfat, 25 Teile $Na_2SiF_6$, 20 Teile Essigsäure (80%ig) und 12 Teile des Egalisierhilfsmittels enthaltend

8 Teile der Verbindung der Formel

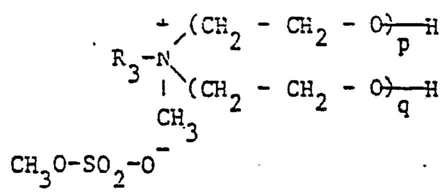

$p + q = 34$,

$R_3 = C_{17-21}$-Kohlenwasserstoffrest ;

30 Teile N,N'-Dimethyloläthylenharnstoff

0,7 Teile des Adduktes von 5 Mol Aethylenoxid an 1 Mol 2-Aethyl-n-hexanol

2 Teile eines sulfatierten Fettaminpolyglykoläthers und

59,3 Teile Wasser bezogen auf 100 Teile Egalisierhilfsmittel, während 15 Minuten bei 50° vorbehandelt. Nach Zugabe einer Lösung von

7,2 Teilen des 1 : 1-Chromkomplexes des Farbstoffes der Formel

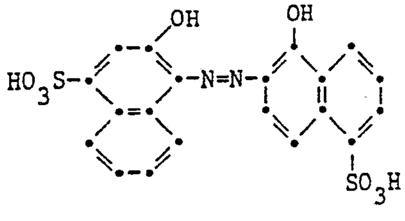

2,1 Teilen des 1 : 1-Chromkomplexes des Farbstoffes der Formel

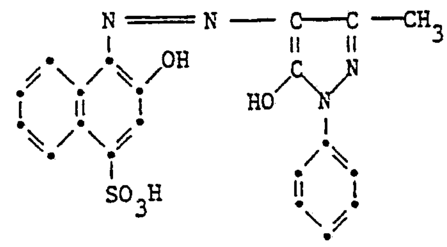

1,5 Teilen des 1 : 1-Chromkomplexes des Farbstoffes der Formel

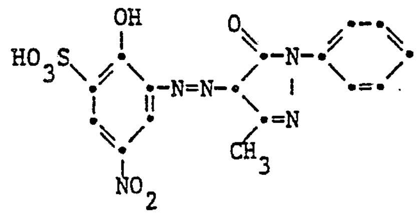

und 5,1 Teilen des 1 : 1-Chromkomplexes des Farbstoffes der Formel

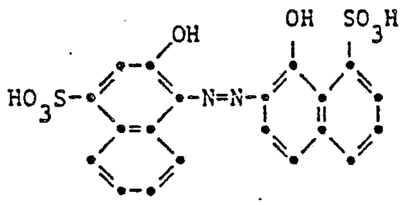

wird die Färbeflotte noch 10 Minuten bei 50° gehalten und anschliessend mit einer Aufheizrate von 1°/Minute auf 70° erwärmt, noch 20 Minuten bei 70° gehalten und anschliessend mit 1°/Minute auf 98° erwärmt. Der pH-Wert beträgt am Anfang des Färbens 4,3. Nach 90 Minuten Färbezeit bei 98° wird auf 60° abgekühlt und die Färbeflotte abgelassen. Das marineblau gefärbte Wollgarn wird zweimal 10 Minuten bei 50°, dann 5 Minuten bei Raumtemperatur gespült und wie üblich getrocknet. Die erhaltene Marinefärbung ist ausgezeichnet faseregal und weist gute Echtheiten auf.

Beispiel 5

100 Teile Polyamid-6,6-Texturtrikot werden in einem Färbebad, welches auf 4 000 Teile Wasser von 40° 1 Teil $Na_2SiF_6$,

4 Teile Ammonacetat und soviel Essigsäure enthält, dass der pH-Wert von 4,5 eingestellt ist, während 10 Minuten vorbehandelt. Nach Zugabe einer Lösung von

0,45 Teilen des 1 : 1-Chromkomplexes des Farbstoffes der Formel

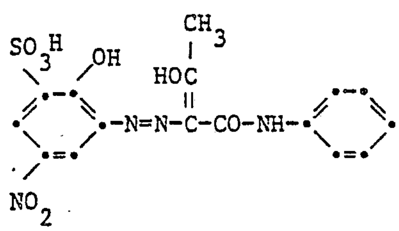

0,55 Teilen des 1 : 1-Chromkomplexes des Farbstoffes der Formel

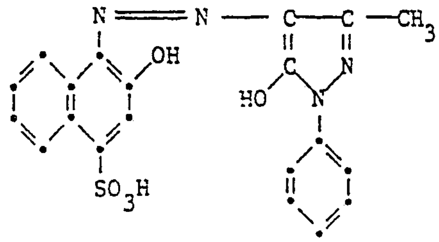

und 0,16 Teilen des 1 : 1-Chromkomplexes des Farbstoffes der Formel

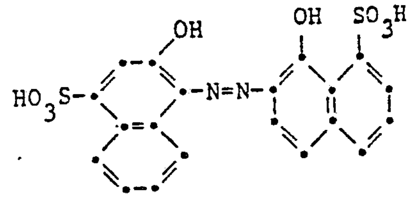

wird die Färbeflotte innerhalb von 45 Minuten auf 98° erwärmt. Nach 90 Minuten Färbezeit bei 98° wird auf 60° abgekühlt. Der braungefärbte Trikot wird wie üblich gespült und getrocknet. Die erhaltene mittelbraune Färbung ist etwas reiner und voller als eine unter gleichen Bedingungen, ohne $Na_2SiF_6$, durchgeführte Färbung.

**Patentansprüche**

1. Verfahren zum Färben von Fasermaterial aus natürlichen oder synthetischen Polyamiden aus wässriger Flotte mit sulfogruppenhaltigen 1 : 1-Metallkomplexfarbstoffen in Gegenwart von Alkali- oder Ammoniumsalz und gegebenenfalls in Gegenwart von Hilfsmitteln, dadurch gekennzeichnet, dass man in Gegenwart von Alkali- oder Ammoniumfluorid, Alkali- oder Ammoniumfluorosilikat oder Alkali- oder Ammoniumfluoroborat bei einem pH-Wert von 3 bis 7 färbt.

2. Verfahren gemäss Anspruch 1, dadurch gekennzeichnet, dass man in Gegenwart von Alkali- oder Ammoniumfluorid färbt.

3. Verfahren gemäss Anspruch 2, dadurch gekennzeichnet, dass man in Gegenwart von Natrium- oder Kaliumfluorid färbt.

4. Verfahren gemäss Anspruch 2, dadurch gekennzeichnet, dass man in Gegenwart von Ammoniumfluorid färbt.

5. Verfahren gemäss Anspruch 1, dadurch gekennzeichnet, dass man in Gegenwart von Natrium- oder Kaliumfluorosilikat färbt.

6. Verfahren gemäss Anspruch 1, dadurch gekennzeichnet, dass man in Gegenwart von Ammoniumfluorosilikat färbt.

7. Verfahren gemäss einem der Ansprüche 1 bis 6, dadurch gekennzeichnet, dass man die halbe bis vierfache Gewichtsmenge, vorzugsweise die ein- bis dreifache und insbesondere die zwei- bis dreifache Gewichtsmenge, bezogen auf die eingesetzte Farbstoff-Gewichtsmenge, an Alkali- oder Ammoniumfluorid, Alkali- oder Ammoniumfluorosilikat oder Alkali- oder Ammoniumfluoroborat verwendet.

8. Verfahren gemäss Anspruch 1, dadurch gekennzeichnet, dass man zur Einstellung des pH-Wertes von 3 bis 7 eine organische Säure, vorzugsweise Essigsäure, und gegebenenfalls zusätzlich ein von Ammonium- oder Alkali-fluorid, -fluorosilikat oder -fluoroborat verschiedenes Ammonium- oder Alkalisalz, insbesondere Alkaliacetat oder Alkalisulfat, vorzugsweise Natriumacetat oder Natriumsulfat, verwendet.

9. Verfahren gemäss einem der Ansprüche 1 bis 8, dadurch gekennzeichnet, dass man bei einem pH-Wert von 4 bis 6, insbesondere 4 bis 5, färbt.

10. Verfahren gemäss Anspruch 1, dadurch gekennzeichnet, dass man in Gegenwart eines Egalisierhilfsmittels oder einer Mischung von Egalisierhilfsmitteln färbt.

11. Verfahren gemäss Anspruch 10, dadurch gekennzeichnet, dass man ein Egalisierhilfsmittel enthaltend eine Verbindung der Formel

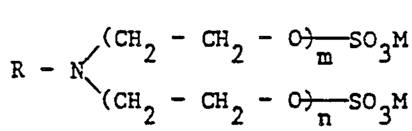 (1)

worin R einen Alkyl- oder Alkenylrest mit 12 bis 22 Kohlenstoffatomen, M Wasserstoff, Alkalimetall oder Ammonium und m und n ganze Zahlen bedeuten, wobei die Summe von m und n 2 bis 14 ist, oder der Formel

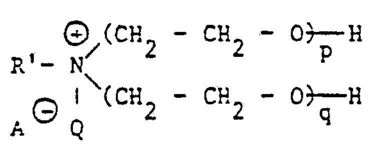 (2)

worin R′ unabhängig von R die für R angegebene Bedeutung hat, A ein Anion, Q einen gegebenenfalls substituierten Alkylrest und p und q ganze Zahlen bedeuten, wobei die Summe von p und q 2 bis 50 ist, oder der Formel

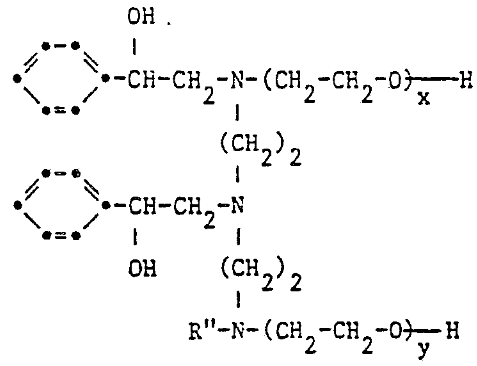

(3)

worin R″ unabhängig von R die für R angegebene Bedeutung hat und x und y ganze Zahlen bedeuten, wobei die Summe von x und y 80 bis 140 ist, eine Mischung enthaltend Verbindungen der Formeln (1) und (2) oder eine Mischung enthaltend Verbindungen der Formeln (1), (2) und (3) verwendet.

12. Verfahren gemäss Anspruch 11, dadurch gekennzeichnet, dass man ein Egalisierhilfsmittelgemisch, enthaltend 5 bis 70 Gewichtsteile der Verbindung der Formel (1), 15 bis 60 Gewichtsteile der Verbindung der Formel (2) und 5 bis 60 Gewichtsteile der Verbindung der Formel (3) bezogen auf 100 Gewichtsteile des Egalisierhilfsmittelgemisches verwendet, und dass in den Formeln (1), (2) und (3) R, R′ und R″ unabhängig voneinander einen Alkyl- oder Alkenylrest mit 16 bis 22 Kohlenstoffatomen bedeuten.

13. Verfahren gemäss Anspruch 11, dadurch gekennzeichnet, dass man eine Verbindung der Formel (2) verwendet, worin sich A und Q von den Quaternisierungsmitteln Chloracetamid, Aethylenchlorhydrin, Aethylenbromhydrin, Epichlorhydrin, Epibromhydrin oder vorzugsweise Dimethylsulfat ableiten.

14. Verfahren gemäss einem der Ansprüche 11 bis 13, dadurch gekennzeichnet, dass man ein Egalisierhilfsmittelgemisch verwendet, welches ausser den Verbindungen der Formeln (1), (2) und (3) noch ein Addukt von 60 bis 100 Molen Aethylenoxid an einen $C_{15-20}$ Alkenylalkohol enthält und worin die Summe von p und q in Formel (2) 20 bis 50 ist.

15. Verfahren gemäss Anspruch 11, dadurch gekennzeichnet, dass man ein Egalisierhilfsmittelgemisch, enthaltend Verbindungen der Formeln (1) und (2), verwendet, worin die Summe der Symbole p und q in Formel (2) 4 bis 10 ist.

16. Verfahren gemäss Anspruch 11, dadurch gekennzeichnet, dass man ein Egalisierhilfsmittelgemisch, enthaltend Verbindungen der Formel (2), verwendet, worin die Summe der Symbole p und q 30 bis 40 ist, und R′ ein Alkylrest mit 15 bis 22 Kohlenstoffatomen ist.

17. Verfahren gemäss einem der Ansprüche 11 bis 16, dadurch gekennzeichnet, dass man 0,3 bis 3 Gewichtsprozent, vorzugsweise 1 bis 2 Gewichtsprozent, bezogen auf das Fasermaterial des Egalisierhilfsmittels oder der Egalisierhilfsmittelmischung verwendet.

18. Verfahren gemäss Anspruch 1, dadurch gekennzeichnet, dass man mindestens einen 1 : 1-Chromkomplexazofarbstoff mit 1 bis 3 Sulfonsäuregruppen, vorzugsweise 1 bis 2 Sulfonsäuregruppen, verwendet.

19. Verfahren gemäss Anspruch 18 zum Trichromie-Färben, dadurch gekennzeichnet, dass man eine Mischung von mindestens drei 1 : 1-Chromkomplexazofarbstoffen aus gelb- bzw. orange-, rot- und blaufärbenden Farbstoffen verwendet.

20. Verfahren gemäss Anspruch 18, dadurch gekennzeichnet, dass man 1 : 1-Chromkomplexazofarbstoffe der Formel

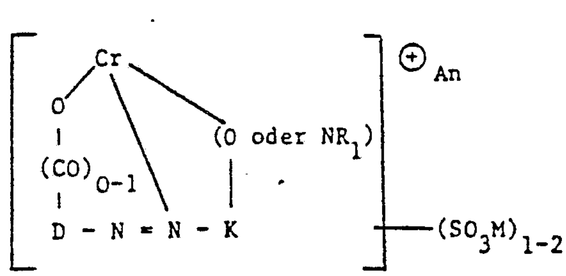

(4)

verwendet, worin die Reste $—(CO)_{0-1}—O—$ und (—O— oder $—NR_1$) in Nachbarstellung zur Azobrücke an D bzw. K gebunden sind, D ein gegebenenfalls durch Halogen, $C_{1-4}$-Alkyl, $C_{1-4}$-Alkoxy, Nitro oder Sulfamoyl substituierter Benzol- oder Naphthalinrest, K ein gegebenenfalls durch Halogen, $C_{1-4}$-Alkyl, $C_{1-4}$-Alkoxy, $C_{2-4}$-Alkanoylamino, Sulfamoyl oder Hydroxy substituierter Phenyl-, Naphthyl-, 1-Phenyl-3-methyl-pyrazolon-(5)-, Acetoacetamid- oder Chinolinrest und $R_1$ Wasserstoff, M ein Alkalikation und An ein Anion ist.

21. Verfahren gemäss Anspruch 1, dadurch gekennzeichnet, dass man als Fasermaterial synthetische Polyamidmaterialien, Seide oder insbesondere Wolle verwendet.

22. Verfahren gemäss Anspruch 21, dadurch gekennzeichnet, dass man als Fasermaterial Wolle verwendet.

23. Verfahren gemäss einem der Ansprüche 1 bis 22, dadurch gekennzeichnet, dass man aus wässriger Flotte nach dem Ausziehverfahren bei Temperaturen zwischen 80° und 105 °C färbt.

24. Verfahren gemäss einem der Ansprüche 1 bis 23, dadurch gekennzeichnet, dass man bei einem Flottenverhältnis von 1 : 8 bis 1 : 80 färbt.

25. Verfahren gemäss Anspruch 1, dadurch gekennzeichnet, dass die Flotte weitere Zusätze enthält.

26. Feste Mischung enthaltend mindestens einen sulfogruppenhaltigen 1 : 1-Metallkomplexfarbstoff, insbesondere einen 1 : 1-Chromkomplexfarbstoff und Alkali- oder Ammoniumfluorid, Alkali- oder Ammoniumfluorosilikat oder Alkali- oder Ammoniumfluoroborat.

27. Verwendung der Mischung gemäss Anspruch 26 zum Färben von natürlichen oder synthetischen Polyamidfasermaterialien.

## Claims

1. A process for dyeing natur or synthetic polyamide fibre material from an aqueous liquor with 1 : 1 metal complex dyes which contain sulfo groups, in the presence of an alkali metal salt or an ammonium salt and optionally in the presence of assistants, which comprises carrying out dyeing in the presence of an alkali metal fluoride or ammonium fluoride, of an alkali metal fluorosilicate or ammonium fluorosilicate, or of an alkali metal fluoroborate or ammonium fluoroborate, at a pH of 3 to 7.

2. A process according to claim 1, wherein dyeing is carried out in the presence of an alkali metal fluoride or ammonium fluoride.

3. A process according to claim 2, wherein dyeing is carried out in the presence of sodium or potassium fluoride.

4. A process according to claim 2, wherein dyeing is carried out in the presence of ammonium fluoride.

5. A process according to claim 1, wherein dyeing is carried out in the presence of sodium fluorosilicate or potassium fluorosilicate.

6. A process according to claim 1, wherein dyeing is carried out in the presence of ammonium fluorosilicate.

7. A process according to any one of claims 1 to 6, which comprises using half to four times the amount by weight, preferably one to three times and, in particular, two to three times, the amount by weight of alkali metal fluoride or ammonium fluoride, alkali metal fluorosilicate or ammonium fluorosilicate, or alkali metal fluoroborate or ammonium fluoroborate, based on the amount by weight of dye employed.

8. A process according to claim 1, wherein the pH of 3 to 7 is adjusted by using an organic acid, preferably acetic acid, and optionally also an ammonium or alkali metal salt other than ammonium fluoride or alkali metal fluoride, ammonium fluorosilicate or alkali metal fluorosilicate, ammonium fluoroborate or alkali metal fluoroborate, in particular an alkali metal acetate or alkali metal sulfate, preferably sodium acetate or sodium sulfate.

9. A process according to any one of claims 1 to 8, wherein dyeing is carried out in a pH range from 4 to 6, in particular from 4 to 5.

10. A process according to claim 1, wherein dyeing is carried out in the presence of a levelling assistant or a mixture of levelling assistants.

11. A process according to claim 10, which comprises the use of a levelling assistant containing a compound of the formula

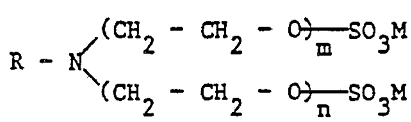

(1)

in which R is an alkyl or alkenyl radical of 12 to 22 carbon atoms, M is hydrogen, an alkali metal or ammonium, and m and n are integers, the sum of m and n being from 2 to 14 ; or of the formula

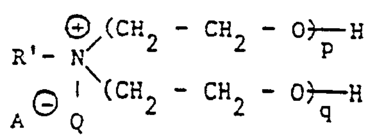

(2)

in which R′ independently of R has the meaning stated for R, A is an anion, Q is an unsubstituted or substituted alkyl radical, and p and q are integers, the sum of p and q being from 2 to 50 ; or of the formula

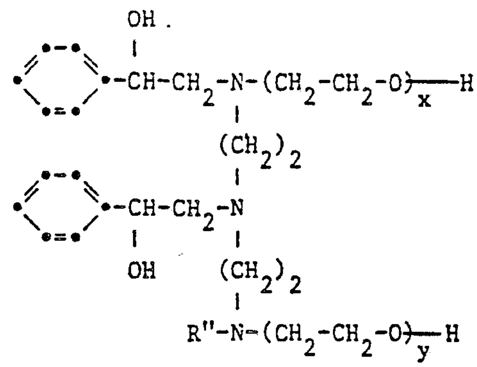 (3)

in which R″ independently of R has the meaning stated for R, and x and y are integers, the sum of x and y being from 80 to 140 a mixture containing compounds of the formulae (1) and (2) or a mixture containing compounds of the formulae (1), (2) and (3).

12. A process according to claim 11, which comprises the use of a mixture of levelling assistants containing 5 to 70 parts by weight of the compound of the formula (1), 15 to 60 parts by weight of the compound of the formula (2), and 5 to 60 parts by weight of the compound of the formula (3), based on 100 parts by weight of the mixture of levelling assistants, and wherein R, R′ and R″ in the formulae (1), (2) and (3) are independently of one another an alkyl or alkenyl radical of 16 to 22 carbon atoms.

13. A process according to claim 11, which comprises the use of a compound of the formula (2), in which A and Q are derived from the quaternising agents chloroacetamide, ethylene chlorohydrin, ethylene bromohydrin, epichlorohydrin, epibromohydrin or, preferably, dimethyl sulfate.

14. A process according to any one of claims 11 to 13, which comprises the use of a mixture of levelling assistants which, in addition to the compounds of the formulae (1), (2) and (3), also contains an adduct of 60 to 100 moles of ethylene oxide with a $C_{15}$-$C_{20}$ alkenyl alcohol and in which the sum of p and q in formula (2) is from 20 to 50.

15. A process according to claim 11, which comprises the use of a mixture of levelling assistants which contains the compounds of the formulae (1) and (2), in which the sum of p and q in formula (2) is from 4 to 10.

16. A process according to claim 11, which comprises the use of a mixture of levelling assistants which contains compounds of the formula (2), in which the sum of p and q is from 30 to 40, and R′ is an alkyl radical of 15 to 22 carbon atoms.

17. A process according to any one of claims 11 to 16, which comprises using 0.3 to 3 percent by weight, preferably 1 to 2 percent by weight, of the levelling assistant or mixture of levelling assistants, based on the fibre material.

18. A process according to claim 1, which comprises using at least one 1 : 1 chromium complex azo dye containing 1 to 3, preferably 1 to 2, sulfo groups.

19. A process according to claim 18 for trichromatic dyeing, which comprises using a mixture of at least three 1 : 1 chromium complex azo dyes selected from yellow or orange, red and blue dyes.

20. A process according to claim 18, which comprises the use of a 1 : 1 chromium complex azo dye of the formula

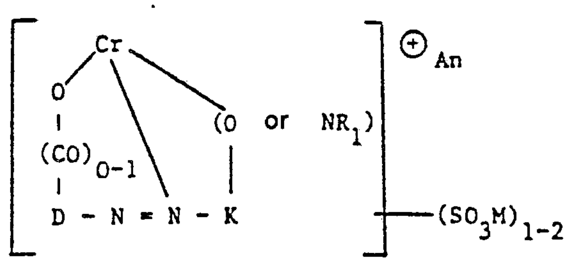 (4)

in which the radicals —(CO)$_{0-1}$—O— and (—O— or —$NR_1$) are linked to D and K adjacent to the azo bridge, D is a radical of benzene or naphthalene which is unsubstituted or substituted by halogen $C_1$-$C_4$alkyl, $C_1$-$C_4$-alkoxy, nitro or sulfamoyl, K is a phenyl, naphthyl, 1-phenyl-3-methylpyrazol-5-one, acetoacetamide or quinoline radical, each unsubstituted or substituted by halogen, $C_1$-$C_4$alkyl, $C_1$-

$C_4$alkoxy, $C_2$-$C_4$-alkanoylamino, sulfamoyl or hydroxyl, and $R_1$ is hydrogen, M is an alkali metal cation, and An is an anion.

21. A process according to claim 1, wherein synthetic polyamide materials, silk or, in particular, wool is used as fibre material.

22. A process according to claim 21, wherein wool is used as fibre material.

23. A process according to any one of claims 1 to 22, wherein dyeing is carried out from an aqueous liquor by the exhaust process at temperatures between 80° and 105 °C.

24. A process according to any one of claims 1 to 23, wherein dyeing is carried out at a liquor to goods ratio of 8 : 1 to 80 : 1.

25. A process according to claim 1, wherein the liquor contains further additives.

26. A solid mixture containing at least one 1 : 1 metal complex dye which contains sulfo groups, in particular a 1 : 1 chromium complex dye, and an alkali metal fluoride or ammonium fluoride, alkali metal fluorosilicate or ammonium fluorosilicate or alkali metal fluoroborate or ammonium fluoroborate.

27. The use of a mixture according to claim 26 for dyeing natural or synthetic polyamide fibre materials.

**Revendications**

1. Procédé de teinture de matières fibreuses en polyamides naturels ou synthétiques, dans un bain aqueux, à l'aide de colorants à complexe métallique 1 : 1 contenant des groupes sulfo, en présence d'un sel de métal alcalin ou d'ammonium, et éventuellement d'adjuvants, caractérisé en ce qu'on procède à la teinture en présence d'un fluorure de métal alcalin ou de fluorure d'ammonium, d'un fluorosilicate de métal alcalin ou de fluorosilicate d'ammonium, ou d'un fluoroborate de métal alcalin ou de fluoroborate d'ammonium, à un pH de 3 à 7.

2. Procédé selon la revendication 1, caractérisé en ce qu'on procède à la teinture en présence d'un fluorure de métal alcalin ou de fluorure d'ammonium.

3. Procédé selon la revendication 2, caractérisé en ce qu'on procède à la teinture en présence de fluorure de sodium ou de potassium.

4. Procédé selon la revendication 2, caractérisé en ce qu'on procède à la teinture en présence de fluorure d'ammonium.

5. Procédé selon la revendication 1, caractérisé en ce qu'on procède à la teinture en présence de fluorosilicate de sodium ou de potassium.

6. Procédé selon la revendication 1, caractérisé en ce qu'on procède à la teinture en présence de fluorosilicate d'ammonium.

7. Procédé selon l'une des revendications 1 à 6, caractérisé en ce que la masse utilisée d'un fluorure de métal alcalin ou de fluorure d'ammonium, d'un fluorosilicate de métal alcalin ou de fluorosilicate d'ammonium, ou d'un fluoroborate de métal alcalin ou de fluoroborate d'ammonium, est de 0,5 à quatre fois, de préférence une à trois fois, et en particulier deux à trois fois la masse de colorant utilisée.

8. Procédé selon la revendication 1, caractérisé en ce qu'on utilise pour ajuster le pH à une valeur comprise entre 3 et 7 un acide organique, de préférence l'acide acétique, et éventuellement, en outre, un sel de métal alcalin ou d'ammonium, différent d'un fluorure, d'un fluorosilicate ou d'un fluoroborate d'ammonium ou de métal alcalin, en particulier un acétate de métal alcalin ou un sulfate de métal alcalin de préférence l'acétate de sodium ou le sulfate de sodium.

9. Procédé selon l'une des revendications 1 à 8, caractérisé en ce qu'on procède à la teinture à un pH de 4 à 6, en particulier de 4 à 5.

10. Procédé selon la revendication 1, caractérisé en ce qu'on procède à la teinture en présence d'un agent d'unisson ou d'un mélange d'agents d'unisson.

11. Procédé selon la revendication 10, caractérisé en ce qu'on utilise un agent d'unisson contenant un composé de formule

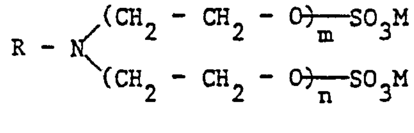

(1)

dans laquelle R est un radical alkyle ou alcényle ayant de 12 à 22 atomes de carbone, M est un hydrogène, un métal alcalin ou l'ammonium, et m et n sont chacun des nombres entiers, la somme de m et n valant de 2 à 14, ou encore de formule

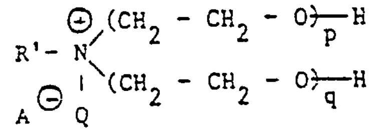

(2)

dans laquelle R', indépendamment de R, a les significations données pour R, A est un anion, Q est un radical alkyle éventuellement substitué, et p et q sont chacun des nombres entiers, la somme de p et q valant de 2 à 50, ou encore de formule

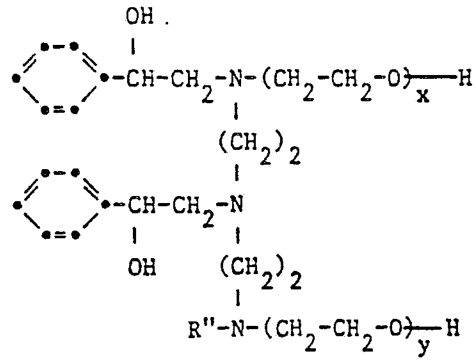

(3)

dans laquelle R'', indépendamment de R, a les significations données pour R, et x et y sont chacun des nombres entiers, la somme de x et y valant de 80 à 140, un mélange contenant des composés de formules (1) et (2), ou encore un mélange contenant des composés de formules (1), (2) et (3).

12. Procédé selon la revendication 11, caractérisé en ce qu'on utilise un mélange d'agents d'unisson, contenant de 5 à 70 parties en poids du composé de formule (1), 15 à 60 parties en poids du composé de formule (2) et 5 à 60 parties en poids du composé de formule (3), par rapport à 100 parties en poids du mélange d'agents d'unisson, et en ce que, dans les formules (1), (2) et (3), les radicaux R, R' et R'', indépendamment les uns des autres, représentent chacun un radical alkyle ou alcényle ayant de 16 à 22 atomes de carbone.

13. Procédé selon la revendication 11, caractérisé en ce qu'on utilise un composé de formule (2) dans lequel A et Q dérivent des agents de quaternisation chloracétamide, éthylènechlorhydrine, éthylènebromohydrine, épichlorhydrine, épibromhydrine ou en particulier sulfate de diméthyle.

14. Procédé selon l'une des revendications 11 à 13, caractérisé en ce qu'on utilise un mélange d'agents d'unisson contenant encore, outre les composés de formules (1), (2) et (3), un produit d'addition de 60 à 100 moles d'oxyde d'éthylène par mole d'un alcool alcénylique en $C_{15}$-$C_{20}$, la somme de p et q, dans la formule (2), valant de 20 à 50.

15. Procédé selon la revendication 11, caractérisé en ce qu'on utilise un mélange d'agents d'unisson contenant des composés de formules (1) et (2), la somme des symboles p et q, dans la formule (2), valant de 4 à 10.

16. Procédé selon la revendication 11, caractérisé en ce qu'on utilise un mélange d'agents d'unisson contenant des composés de formule (2), la somme des symboles p et q valant de 30 à 40, R' étant un radical alkyle ayant de 15 à 22 atomes de carbone.

17. Procédé selon l'une des revendications 11 à 16, caractérisé en ce que la quantité utilisée de l'agent d'unisson ou du mélange d'agents d'unisson est de 0,3 à 3 % en poids, de préférence de 1 à 2 % en poids, par rapport à la matière fibreuse.

18. Procédé selon la revendication 1, caractérisé en ce qu'on utilise au moins un colorant azoïque à complexe de chrome 1 : 1 comportant de 1 à 3 groupes acide sulfonique, de préférence 1 à 2 groupes acide sulfonique.

19. Procédé selon la revendication 18 pour teinture par trichromie, caractérisé en ce qu'on utilise un mélange d'au moins trois colorants azoïques à complexe de chrome 1 : 1, constitué de colorants donnant des teintes jaune ou orangé, rouge ou bleu.

20. Procédé selon la revendication 18, caractérisé en ce qu'on utilise des colorants azoïques à complexe de chrome 1 : 1 de formule

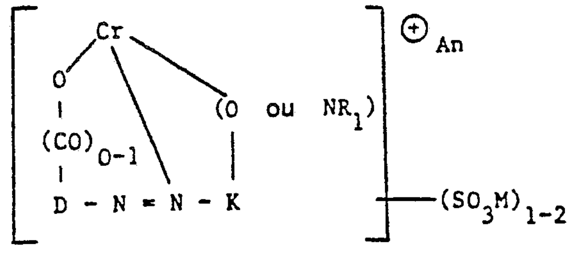

(4)

dans laquelle les radicaux $-(CO)_{0-1}-O-$ et ($-O-$ ou $-NR_1$) sont liés respectivement à D et K en position voisine du point azoïque, D est un radical benzène ou naphtalène, éventuellement substitué par

un halogène, un radical alkyle en $C_1$-$C_4$, alcoxy en $C_1$-$C_4$ ou le radical nitro ou sulfamoyle, K est un radical phényle, naphtyle, 1-phényl-3-méthyl-pyrazolone-(5)-, acéto-acétamido ou quinoléine, éventuellement substitué par un halogène, un radical alkyle en $C_1$-$C_4$, alcoxy en $C_1$-$C_4$, alcanoylamino en $C_2$-$C_4$ ou le radical sulfamoyle ou hydroxy, et $R_1$ est un hydrogène, M est un cation de métal alcalin et An est un anion.

21. Procédé selon la revendication 1, caractérisé en ce qu'on utilise comme matière fibreuse des matières en polyamide synthétique, de la soie et en particulier de la laine.

22. Procédé selon la revendication 21, caractérisé en ce que la matière fibreuse utilisée est la laine.

23. Procédé selon l'une des revendications 1 à 22, caractérisé en ce qu'on procède à la teinture dans un bain aqueux, par le procédé par épuisement à des températures de 80 à 105 °C.

24. Procédé selon l'une des revendications 1 à 23, caractérisé en ce qu'on procède à la teinture avec un rapport de bain de 1 : 8 à 1 : 80.

25. Procédé selon la revendication 1, caractérisé en ce que le bain contient des additifs supplémentaires.

26. Mélange solide contenant au moins un colorant à complexe métallique 1 : 1 contenant des groupes sulfo, en particulier un colorant à complexe de chrome 1 : 1, et un fluorure de métal alcalin ou le fluorure d'ammonium, un fluorosilicate de métal alcalin ou le fluorosilicate d'ammonium, ou un fluoroborate de métal alcalin ou le fluoroborate d'ammonium.

27. Utilisation du mélange selon la revendication 26 pour teindre des matières fibreuses en polyamide naturel ou synthétique.